(19) Europäisches Patentamt
European Patent Office
Office européen des brevets

(11) EP 2 388 476 A2

(12) EUROPEAN PATENT APPLICATION

(43) Date of publication:
23.11.2011 Bulletin 2011/47

(51) Int Cl.:
$F03D\ 1/00$ (2006.01) $\qquad$ $F03D\ 7/04$ (2006.01)
$F03D\ 11/00$ (2006.01)

(21) Application number: 11163776.5

(22) Date of filing: 26.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.04.2010 US 769745

(71) Applicant: General Electric Company
Schenectady, NY 12345 (US)

(72) Inventors:
• Thulke, Matthias
  12587, Berlin (DE)
• Honekamp, Thorsten
  49824, Emlichheim, Niedersachsen (DE)
• Aschermann, Rene
  48529, Nordhorn (DE)

(74) Representative: Bedford, Grant Richard
Global Patent Operation - Europe
GE International Inc.
15 John Adam Street
London WC2N 6LU (GB)

(54) **Method for temperature calibration of blade strain gauges and wind turbine rotor blade containing strain gauges**

(57) A method for temperature calibration of a strain sensor (160) for a rotor blade (110) of a wind turbine (100) is provided, the method including operating the wind turbine (100) in a mode in which substantially no bending of the rotor blade (110) due to wind occurs, repeatedly measuring gravitationally induced bending moments of the rotor blade (110) for a plurality of temperatures measured at the place of the strain sensor (160), determining a temperature dependency of the strain sensor (160) on the temperature, calibrating the strain sensor (160) based on the determined temperature dependency of the strain sensor (160) such that the temperature dependency of the strain sensor (160) is compensated.

Fig. 5

EP 2 388 476 A2

**Description**

The present disclosure relates to wind turbines. Particularly, the present disclosure relates to a wind turbine rotor blade which is adapted to perform a temperature calibration of a strain sensor and methods for temperature calibration of a strain sensor arranged at a rotor blade of a wind turbine.

Although horizontal axis wind turbines are well-established these days, there is still considerable engineering effort going on to further improve their overall efficiency, power generating capability, and robustness.

Modem wind turbines are designed to produce a maximum amount of energy in a particular geographical area. Therefore, wind turbines are operated such that the operational wind speed range is increased. This increases the loads on almost all parts of a wind turbine, especially the rotor blades which are typically produced from light weight materials, like glass or carbon fibers. Excessive loads will result in fatigue failures of the rotor blades. As the power generation should be maximized, wind turbine rotor blades are operated closer and closer to their fatigue limit.

As fatigue failure of rotor blades should be avoided, there is a need to know exactly when those fatigue failures will occur. Typically, fatigue failures will occur at a well-defined stress within the material of the rotor blades. As the material constants for the material used to build the rotor blade are known, one can predetermine the force at which the material will break.

In view of the above, in accordance with an aspect of the present invention a rotor blade including a first strain sensor arranged at a surface of the rotor blade, and a first temperature sensor arranged adjacent to the first strain sensor is provided.

According to another aspect of the disclosure, a method for temperature calibration of a strain sensor arranged at a rotor blade of a wind turbine is provided. The method includes operating the wind turbine in a mode in which substantially no bending of the rotor blade due to wind occurs, repeatedly measuring gravitationally induced bending moments of the rotor blade for a plurality of temperatures measured at the location of the strain sensor, determining a temperature dependency of the strain sensor from said measured data, calibrating the strain sensor based on the determined temperature dependency of the strain sensor such that the temperature dependency of the strain sensor is compensated.

According to yet another aspect of the disclosure, a further method for temperature calibration of a strain sensor arranged at a rotor blade of a wind turbine is provided. The method includes controlling a temperature of a part of the rotor blade in which said strain sensor is located, measuring a strain using the strain sensor, measuring temperature at the location of the strain sensor, varying the controlled temperature and repeating the strain and temperature measurements at a different temperature; determining a temperature dependency of the strain sensor from said measured data, and calibrating the strain sensor based on the determined temperature dependency of the strain sensor such that the temperature dependency of the strain sensor is compensated.

Various aspects, advantages and features of the present invention are apparent from the dependent claims, the description and the accompanying drawings, in which:

Fig. 1 is a schematic side view of a wind turbine having rotor blades according to embodiments described herein.

Fig. 2 is a schematic drawing of a Wheatstone bridge circuit used in embodiments described herein.

Fig. 3 is a schematic drawing illustrating four strain gauges which are electrically connected to each other for forming a Wheatstone bridge circuit used in embodiments described herein.

Figs. 4, 5, 6, and 7 are schematic longitudinal cross sectional views of a wind turbine rotor blade according to embodiments described herein.

Fig. 8 illustrates a method for temperature calibration of a strain sensor arranged at a rotor blade of a wind turbine according to embodiments described herein.

Fig. 9 illustrates the relationship between measured blade moment curves and the parameters ratio of span and difference of offset which are used in embodiments described herein.

Fig. 10 illustrates a further method for temperature calibration of a strain sensor arranged at a rotor blade of a wind turbine according to embodiments described herein.

Fig. 11 is a schematic longitudinal cross sectional view of a rotor blade root of a wind turbine according to embodiments described herein.

Fig. 12 is a schematic longitudinal cross sectional view of a rotor blade root of a wind turbine according to embodiments described herein.

Fig. 13 is a schematic perspective view of a rotor blade root of a wind turbine according to embodiments described herein.

Fig. 14 is a schematic longitudinal cross sectional view of a rotor blade root of a wind turbine according to embodiments described herein.

Fig. 15 is a schematic perspective view of a rotor blade root of a wind turbine according to embodiments described herein.

Fig. 16 illustrates yet a further method for temperature calibration of a strain sensor arranged at a rotor blade of a wind turbine according to embodiments described herein.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

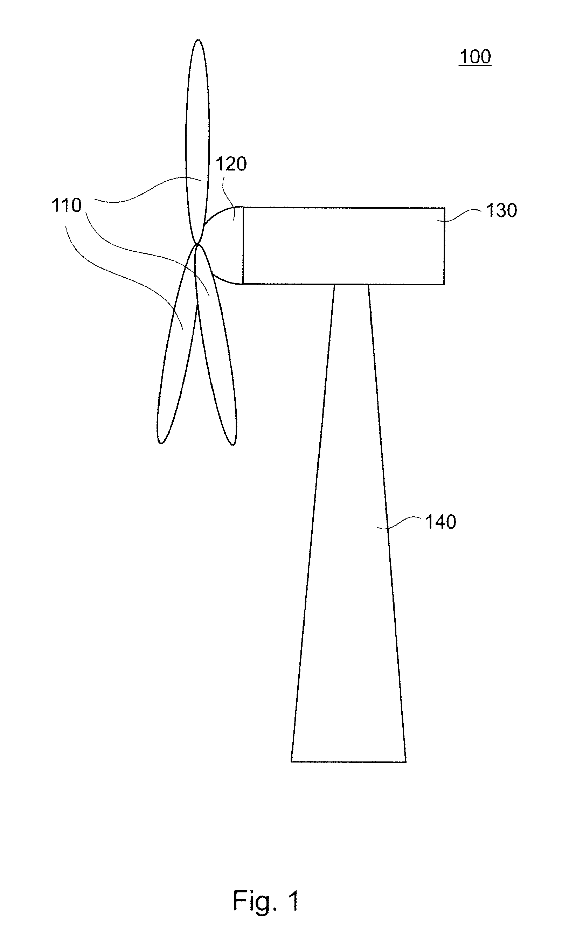

Fig. 1 is a schematic side view of a wind turbine 100. The wind turbine 100 includes three rotor blades 110 but may have more or less blades 110 according to other embodiments. The rotor blades 110 are mounted on a rotor hub 120 which is connected to a nacelle 130. Nacelle 130 is fixed on top of a tower 140. Rotor blades 110 include strain sensors which are adapted to measure bending moments of rotor blades 110.

The rotor blades of a wind turbine are subject to considerable forces and moments due to wind load, gravitation, and centrifugal force. Such blade moments are typically proportional to a stretching or bending of the rotor blades which can be measured by strain sensors. Typical strain sensors are strain gauges which may be realized as flat electrical resistors. The resistance of those flat resistors changes linearly to length variations of the sensors. Typically, those strain gauges are bonded or glued onto a surface of the rotor blades being tested. Strain gauges may measure tiny relative length variations, as small as $10^{-6}$.

A fundamental parameter of a strain gauge is its sensitivity to strain, expressed quantitatively as the gauge factor (GF). The gauge factor is defined as the ratio of relative change in electrical resistance ($\Delta R/R$) to the strain which is the relative change in length ($\Delta L/L$):

$$GF = \frac{\Delta R/R}{\Delta L/L}$$

For metallic foil gauges, the gauge factor is typically about 2.

Typically, strain measurements seldom involve strains larger than $10^{-3}$. Therefore, typically electrical resistance changes smaller than 1 $\Omega$ are to be measured. For measuring such small electrical resistances changes, strain gauges are typically used in a Wheatstone bridge configuration including a voltage excitation source.

Typically, the resistance strain gauges are bonded to a surface of the rotor blade in order to detect the strain in the surface. However, strain gauges exhibit temperature dependency and, therefore, should be operated such that inaccuracies due to change in temperature are compensated or at least reduced. This is due not only to the fact that the resistance of most of the conductive materials used in bonded resistance strain gauge filaments changes with temperature, but also because the coefficient of thermal expansion (CTE) of the strain gauge filament is often different from that of the structure to which it is bonded and sensitivity to or measurement of strains resulting from thermal expansion is not desired and will lead to measurement inaccuracies. Thus, even if the filament of the strain gauge were not directly temperature-sensitive because of its change in resistance with change in temperature, it would still be subject to false strain indications with temperature unless it has a coefficient of thermal expansion matched with the CTE of the surface to which it is bonded. Such matching is difficult and expensive because a strain gauge matched to steel is greatly in error if bonded to aluminum or some other material, and vice versa.

Temperature variations cause various effects in strain gauges. The measurement object changes in size by thermal expansion, which is detected as strain. The electrical resistance of the strain gauge and the electrical resistance of the connecting wires will change. The resistance changes of the strain gauges are on the same magnitude as the length changes. Typically, they are both on the order of $10^{-6}$. To measure such small resistance changes, strain gauges are typically used in a Wheatstone bridge arrangement with a voltage excitation source.

Since temperature variations also result in resistance variations in a gauge filament, some means should be employed to cancel the effects of these temperature changes from the strain measurements. The resistance variations which accompany temperature variations are caused not only by the thermal coefficient of resistivity of the wire filament, but also by the differences in the linear CTEs of the wire and test structure. Thus, the temperature sensitivity of a particular gauge will vary according to the material to which it is affixed, and any compensating system must be usable with a variety of test materials. Such temperature sensitivity is often experienced as "apparent strain" rather than as a variation in resistance, since the ultimate error calculation must relate to the actual strain measurements. The most widely used temperature compensation device for strain gauges, the above mentioned Wheatstone bridge, makes use of the electrical system to which they are electrically connected and also of the mechanical system to which they are fixed.

Undesired temperature effects may be compensated to a good degree using a Wheatstone bridge circuit. However, differences due to different CTEs of the strain sensor and the underlying material may not be compensated for completely. This can be done by an exigent temperature calibration in which strain sensors measure strain at various locations of the rotor blade while simultaneously measuring the temperature at those strain sensors.

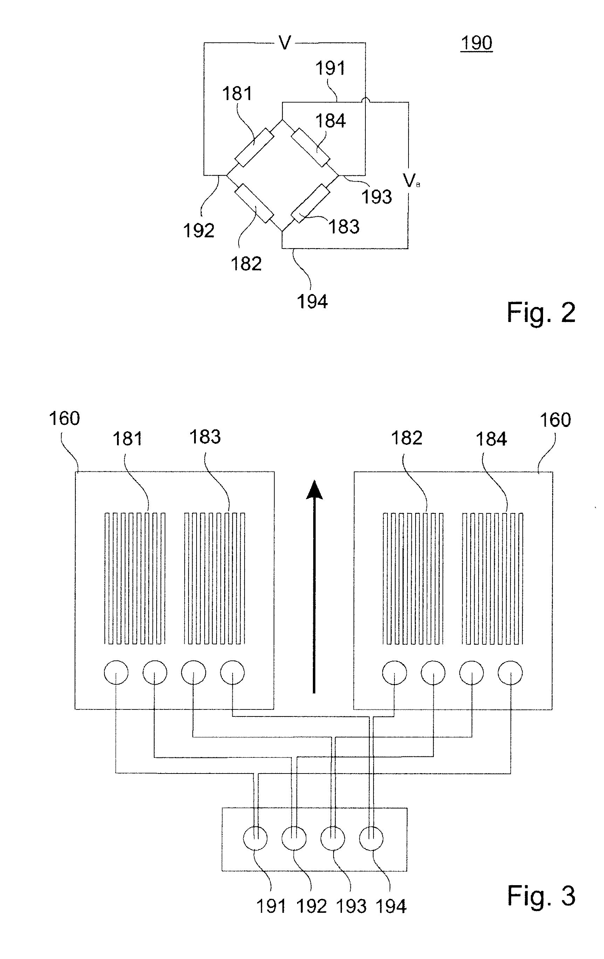

Fig. 2 shows a schematic drawing of a Wheatstone bridge circuit 190 as it will be employed in embodiments disclosed herein. Wheatstone bridge circuit 190 includes four resistors 181, 182, 183, and 184 which are connected to each other to form a closed loop of the four resistors 181, 182, 183, and 184 arranged as depicted in Fig. 2. At the junctions of the resistors 181, 182, 183, and 184 are provided four Wheatstone bridge contacts 191, 192, 193, and 194. Typically, an excitation voltage $V_B$ is applied between Wheatstone bridge contacts 191 and 194 and a bridge voltage V is measured between contacts 192 and 193. The bridge voltage V equals:

$$ V = V_B \left[ \frac{R_{181}}{R_{181} + R_{182}} - \frac{R_{184}}{R_{183} + R_{184}} \right]. $$

Here, $R_{181}$, $R_{182}$, $R_{183}$, and $R_{184}$ are the resistances of the four resistors 181, 182, 183, and 184. In case the ratio $R_{182}/R_{181}$ equals the ratio $R_{183}/R_{184}$, the voltage V is equal to zero in which case the Wheatstone bridge is said to be balanced. Any change in resistance of any resistor of the bridge results in a nonzero bridge voltage which typically is the case if the resistance variations of the four resistors 181, 182, 183, and 184 are not equal.

In case of wind turbines, the four resistors 181, 182, 183, and 184 are typically realized by strain sensors or strain gauges. There are various possibilities to use a Wheatstone bridge with strain gauges. It is possible to use only one strain gauge as a Wheatstone bridge resistor, in which case the Wheatstone bridge circuit is called a quarter-bridge circuit. If two strain gauges are used as Wheatstone bridge resistors, the Wheatstone bridge circuit is called a half-bridge circuit. If all Wheatstone bridge resistors are strain gauges, the Wheatstone bridge circuit is called a full-bridge circuit. The measured signal of a full Wheatstone bridge is linearly proportional to the strain to be measured.

Typically, for measuring strain of a rotor blade, two strain sensors measure strain of opposite sign at the rotor blade root. If, e.g., a rotor blade root bends towards a definite direction, strain of opposite sign occurs at circumferentially opposite locations of the rotor blade root. In case of edgewise bending, the strain sensors are arranged parallel to the edge-wise direction on opposing inner walls of the rotor blade root. Each strain sensor includes two strain gauges which are both aligned along a direction from rotor blade root to rotor blade tip. The strain gauges of each strain sensor are arranged on opposing sides of the Wheatstone bridge circuit 190. In that case, the measured voltage V is linear proportional to the edgewise strain of rotor blade 110. In that case, the compensation of the CTE is realized between the strain gauges of the same strain sensor, so mostly at the same location. However, other strain gauge arrangements are also possible where strain gauges at different locations of the rotor blade are CTE compensated.

To additionally measure flapwise strain, a further Wheatstone bridge circuit may be used whose strain sensors are arranged parallel to the flapwise direction.

Fig. 3 is a schematic drawing illustrating four strain gauges which are electrically connected to each other to form a Wheatstone bridge circuit 190. The Wheatstone bridge resistors 181, 182, 183, and 184 are realized by four strain gauges. The resistors 181 and 183 form a left strain sensor 160 and the resistors 182 and 184 form a right strain sensor 160. The four strain gauges are aligned along a direction from rotor blade root to rotor blade tip, the direction being indicated by an arrow in Fig. 3. The left strain sensor 160 is arranged inside the rotor blade root circumferentially opposite to the right strain sensor 160. Thus, the left strain sensor 160 measures opposite equal strain compared to the right strain sensor 160. As the resistors 181 and 183 on the left are arranged at the same location of the rotor blade root, they are typically temperature compensated to a good degree. As the resistors 182 and 184 on the right are also arranged at the same location of the rotor blade root, typically they are also temperature compensated to a good degree.

The four Wheatstone bridge contacts 191, 192, 193, and 194 connect the four Wheatstone bridge resistors 181, 182, 183, and 184. This results in a Wheatstone bridge circuit 190 as in the embodiment of Fig. 2 which typically measures edgewise or flapwise strain of a rotor blade.

In order to measure edgewise and flapwise bending simultaneously, two Wheatstone bridge circuits 190 are provided which are adapted to measure rotor blade bending in substantially orthogonal directions. This is typically achieved by arranging the Wheatstone bridge circuits 190 orthogonal to each other.

According to other embodiments, the Wheatstone bridge resistors 181, 182, 183, and 184 may be connected to the Wheatstone bridge contacts 191, 192, 193, and 194 in a different way. The Wheatstone bridge resistors 181, 182, 183, and 184 may also be aligned along different directions, e.g. Wheatstone bridge resistors 181 and 182 may be aligned along a horizontal direction while Wheatstone bridge resistors 183 and 184 may be aligned along a vertical direction. According to further embodiments, it is possible to measure torsion moments of the rotor blade.

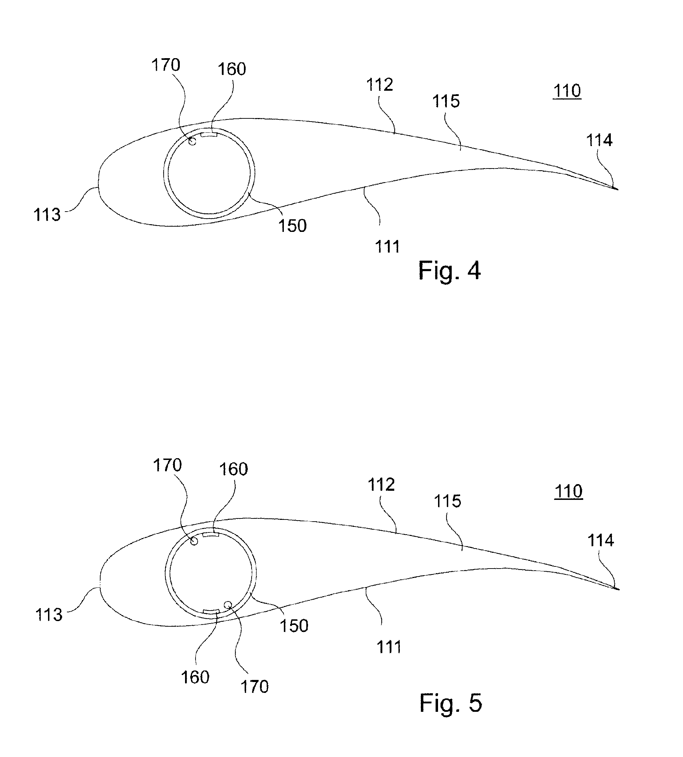

Fig. 4 shows a schematic longitudinal cross sectional view of a rotor blade 110 of a wind turbine 100 seen from a rotor blade root 150 to a rotor blade tip. The rotor blade root 150 including strain sensors 160 and temperature sensors 170 is closer to the observer of Fig. 4 than an airfoil portion 115 of rotor blade 110. Wind impinges rotor blade 110 at a leading edge 113 and leaves rotor blade 110 at a trailing edge 114. One part of the wind travels around rotor blade 110 on a pressure side 112, another part of the wind travels around rotor blade 110 on a suction side 111 of rotor blade 110. Rotor blade 110 typically has a round cross sectional shape at a flange at rotor blade root 150. This cross sectional shape changes its outline from a circle to a typical airfoil shape as one travels from rotor blade root 150 to the airfoil portion 115 of rotor blade 110.

Rotor blade 110 includes one strain sensor 160 arranged at an inner surface of the rotor blade root 150 near pressure side 112 of rotor blade 110. Strain sensor 160 is adapted to measure a bending moment of rotor blade 110 along a direction from blade root 150 to blade tip. A chord line of rotor blade 110 extends from leading edge 113 to trailing edge 114. Oscillations of rotor blade 110 in the direction of the chord line are sometimes called edge-wise oscillations. Oscillations perpendicular to the direction of chord line between suction side 111 and pressure side 112 are sometimes called flap-wise oscillations. Accordingly, directions along those oscillations are called edge-wise and flap-wise directions.

In case of flap-wise oscillations of rotor blade 110, bending of rotor blade root 150 along a direction from rotor blade root to blade tip is very large at portions near pressure side 112 and near suction side 111. If strain sensors 160 are located at those portions, flapwise bending of rotor blade root 150 can be detected with high sensitivity.

As temperature-related effects are the most common causes of error in strain measurements, the strain sensor should be temperature calibrated such that the temperature dependency of the measured data is eliminated.

A temperature sensor 170 is arranged adjacent strain sensor 160. Temperature sensor 170 measures the temperature at the location of strain sensor 160. By doing this, a functional dependency of the measured strain data on the local temperature may be obtained. Strain may also be measured for various rotor angle positions, various pitch angle settings and for different temperatures. For that measured strain data, a regression analysis may be performed to compensate strain sensor 160 with regard to temperature effects.

Fig. 5 shows a schematic longitudinal cross sectional view of a rotor blade 110 of a wind turbine 100 seen from a rotor blade root 150 to a rotor blade tip. The rotor blade root 150 including strain sensors 160 and temperature sensors 170 is closer to the observer of Fig. 5 than an airfoil portion 115 of rotor blade 110.

Rotor blade 110 includes two strain sensors 160 arranged at an inner surface of the rotor blade root 150. The strain sensors 160 are arranged circumferentially opposite to each other. One strain sensor 160 is arranged near suction side 111 of rotor blade 110; the other strain sensor 160 is arranged near pressure side 112 of rotor blade 110. Strain sensors 160 are adapted to measure a bending moment of rotor blade 110 along a direction from blade root 150 to blade tip.

In case of flap-wise oscillations of rotor blade 110, bending of rotor blade root 150 is large at portions near pressure side 112 and near suction side 111. If strain sensors 160 are located at those portions, flapwise bending of rotor blade root 150 can be detected with high sensitivity.

For each strain sensor 160, there is provided a temperature sensor 170 arranged adjacent to said strain sensor 160. The temperature at the location of a strain sensor 160 is measured by the temperature sensor 170 arranged adjacent to that strain sensor 160. By doing this, a functional dependency of the measured strain data on the local temperature is obtained. Strain may also be measured for various rotor angle positions, various pitch angle settings and for different temperatures. For that measured strain data, a regression analysis may be performed to compensate strain sensor 160 with regard to temperature effects.

According to some embodiments, each strain sensor 160 includes two strain gauges. The in total four strain gauges of the two strain sensors 160 are electrically connected to each other for forming a full Wheatstone bridge circuit 190 with the strain gauges being the resistors of Wheatstone bridge circuit 190.

Using such a Wheatstone bridge circuit 190 in connection with rotor blade 110 of the embodiment of Fig. 5, flapwise bending of rotor blade 110 may be measured with high accuracy.

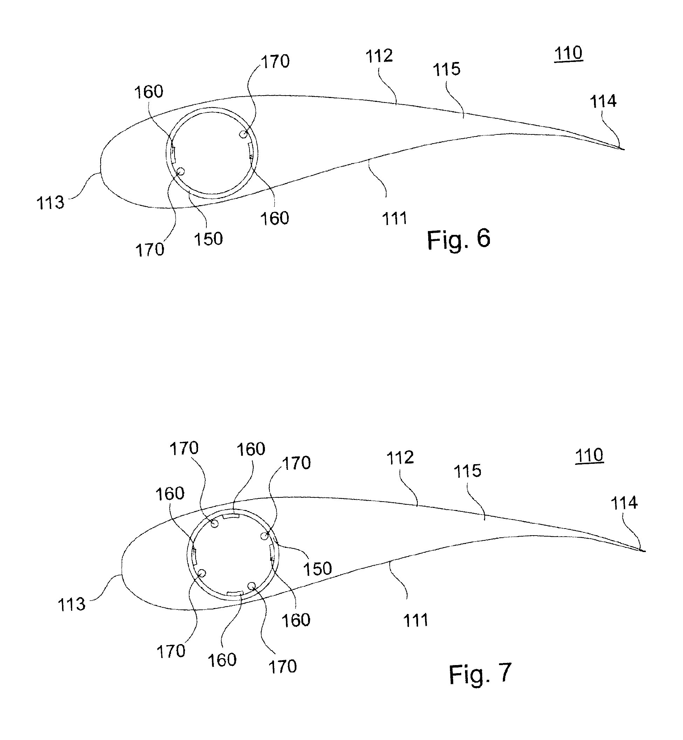

Fig. 6 shows a schematic longitudinal cross sectional view of a rotor blade 110 of a wind turbine 100 seen from a rotor blade root 150 to a rotor blade tip. The rotor blade root 150 including strain sensors 160 and temperature sensors 170 is closer to the observer of Fig. 6 than an airfoil portion 115 of rotor blade 110.

Rotor blade 110 includes two strain sensors 160 arranged at an inner surface of the rotor blade root 150. Strain sensors 160 are arranged circumferentially opposite to each other. One strain sensor 160 is arranged facing leading edge 113 of the rotor blade 110; the other strain sensor 160 is arranged facing trailing edge 114 of rotor blade 110. Strain sensors 160 are adapted to measure a bending moment of rotor blade 110 along a direction from blade root 150 to blade tip. As strain sensors 160 of the embodiment of Fig. 6 are arranged along the edge-wise direction, strain sensors 160 are very sensitive to measure strain along the edge-wise direction.

According to the embodiment of Fig. 6, for each strain sensor 160 there is a temperature sensor 170 arranged adjacent to said strain sensor 160. The temperature at the location of strain sensor 160 can be measured by the temperature sensor 170. By doing this, a dependency of the measured strain data on the local temperature at the position of strain sensor 160 is obtained.

Fig. 7 shows a schematic longitudinal cross sectional view of rotor blade 110 of wind turbine 100 seen from rotor blade root 150 to the rotor blade tip. The rotor blade root 150 including strain sensors 160 and temperature sensors 170 is closer to the observer of Fig. 7 than an airfoil portion 115 of rotor blade 110.

Rotor blade 110 includes four strain sensors 160 which are arranged at an inner surface of the rotor blade root 150 in the same plane. The two strain sensors 160 at the top and bottom of Fig. 7 form the first strain sensor pair, while the two strain sensors 160 at the left and right of Fig. 7 form the second strain sensor pair. The connection lines of the pairs of strain sensors 160 are orthogonal to each other. One strain sensor 160 is arranged near suction side 111 of rotor blade 110, one strain sensor 160 is arranged near pressure side 112 of rotor blade 110, one strain sensor 160 is arranged facing leading edge 113 of the rotor blade 110 and one strain sensor 160 is arranged facing trailing edge 114 of rotor blade 110. Strain sensors 160 are adapted to measure a bending moment of rotor blade 110 along a direction from blade root 150 to blade tip.

The first strain sensor pair at the top and bottom of Fig. 7 is aligned along the flap-wise direction. Therefore, the first strain sensor pair is sensitive to measure strain along the flap-wise direction. The second strain sensor pair at the left and right of Fig. 7 is aligned along the edge-wise direction. Therefore, the second strain sensor pair is sensitive to measure strain along the edge-wise direction.

According to some embodiments, each strain sensor 160 includes two strain gauges. The in total eight strain gauges of the four strain sensors 160 form two full Wheatstone bridge circuits 190 with the strain gauges being the resistors of the Wheatstone bridge circuits 190. The four strain gauges of the first strain sensor pair are electrically connected to each other for forming a first full Wheatstone bridge circuit 190. The four strain gauges of the second strain sensor pair are electrically connected to each other for forming a second full Wheatstone bridge circuit 190.

According to the embodiment of Fig. 7, for each strain sensor 160 there is a temperature sensor 170 arranged adjacent to said strain sensor 160. What has been said about strain sensors 160 and temperature sensors 170 in connection with the embodiments of Figs. 5 and 6 also applies to the embodiment of Fig. 7.

In the following, two methods will be described which use so-called slow rolls of the wind rotor to calibrate strain sensors of rotor blades. Typically, slow rolls are characterized by the fact that the wind rotor is spinning slowly and almost no wind load is applied to the rotor blades 110. Therefore, substantially no bending of rotor blades due to wind occurs during slow rolls. During slow rolls, the rotational speed of the electric generator is between 90 and 200 revolutions per minute (RPM). This corresponds to about 1 to 2 RPM of the rotor hub and a wind speed of about 2 to 3 meters per second (m/s). By contrast, the wind turbine is typically operated with 12 to 15 RPM when producing electric energy.

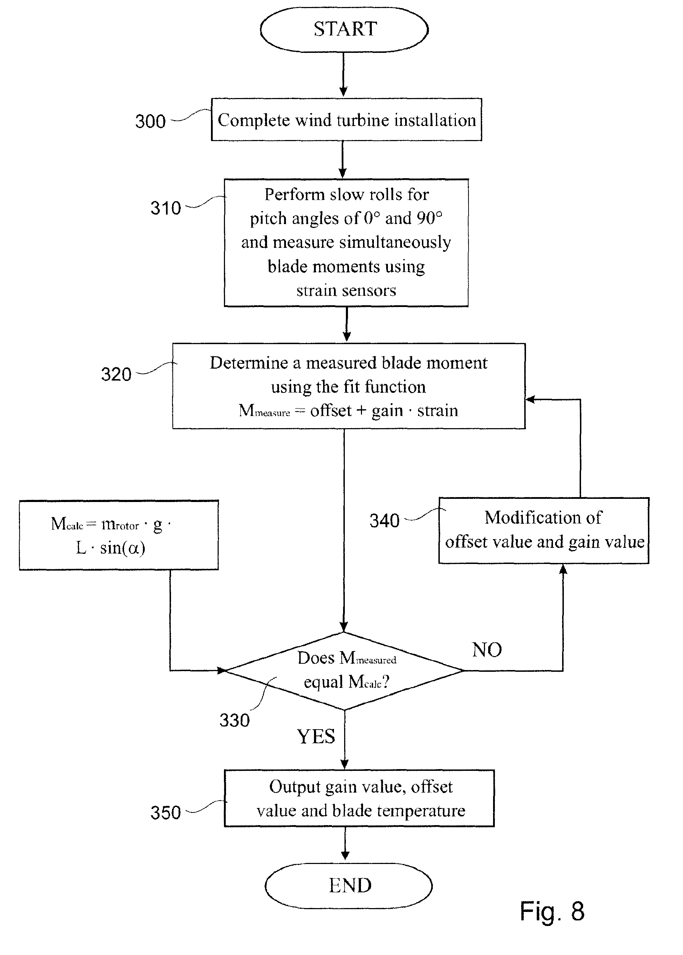

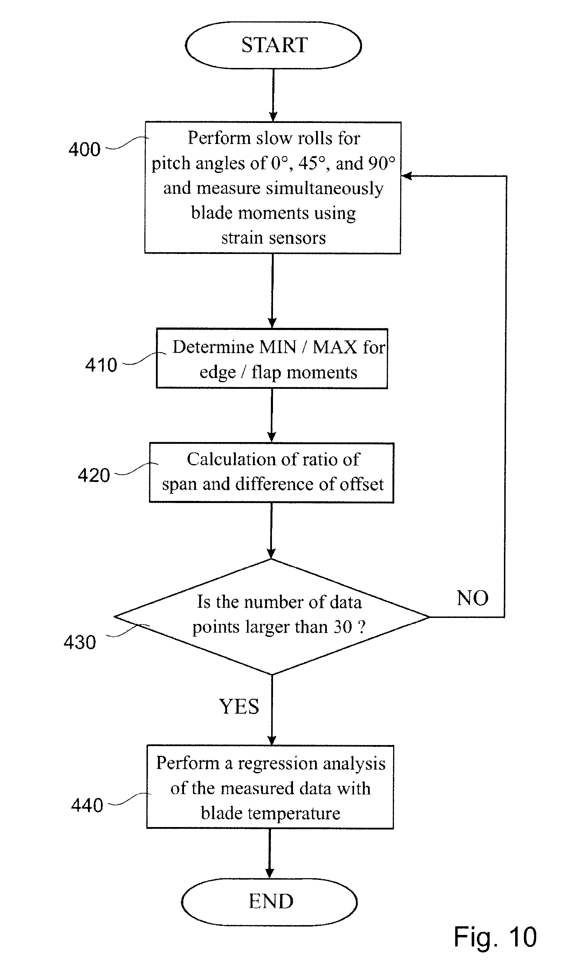

In a first method which is depicted in Fig. 8, a blade moment is determined using the factory settings of the used strain sensors. That blade moment is called measured blade moment $M_{measured}$. For the determination of $M_{measured}$ a fit function is used. $M_{measured}$ is then compared to a calculated blade moment $M_{calc}$. $M_{calc}$ can be determined to good accuracy, while the value of $M_{measured}$ is typically less accurate as a fit function and factory settings are used hereby. The fitting parameters of the fitting function are adjusted until $M_{measured}$ and $M_{calc}$ match within a predetermined error margin. In a second method which is depicted in Fig. 10, strain data are measured for various blade positions and various temperatures. Subsequently, a regression analysis of the measured strain data with respect to the temperature is performed, thus calibrating the temperature dependency of the used strain sensors.

A gravitational or gravitationally induced blade moment is the bending moment acting on the rotor blade originating from the gravitational force. In case the rotor blade is pointing to the ground, no bending moment are acting within that rotor blade. Thus, the blade moment depends on the angle of rotor blade 110 which is also called rotor position, rotor blade 110 having a rotor position of 0° when pointing upwards.

The calculated gravitational blade moment $M_{calc}$ is calculated using the formula

$$M_{calc} = m_{blade} \cdot g \cdot L \cdot \sin \alpha \,,$$

wherein $m_{blade}$ is the mass of rotor blade 110, g is the standard gravity, which is the nominal acceleration due to gravity at the Earth's surface at sea level, $\alpha$ is the rotor position angle, and L is the length from the rotor axis to the center of gravitation (COG) of the rotor blade.

Additionally or alternatively, the calculated gravitational blade moment $M_{calc}$ may be determined by simulations which typically may be multibody simulations. Those simulations take into account the real orientation of the rotor blade with respect to the rotor axis, the stiffness of the used material of the rotor blade and so forth.

The gravitational blade moment can be measured during slow rolls with the strain sensors provided in the rotor blades. Typically, the strain sensors are used in a Wheatstone bridge circuit as depicted in Fig. 2. In principle, the electrical signal of the strain sensors used in a full Wheatstone bridge circuit is linearly proportional to the strain. However, due to different CTEs of the used strain gauges of the strain sensors and the underlying material, there is a temperature dependent offset and also a temperature dependent gain. The dependency of a measured blade moment $M_{measured}$ on strain may be expressed to a good approximation as follows:

$$M_{measured} = offset(T) + gain(T) \cdot strain \,,$$

wherein offset(T) and gain(T) are temperature dependent functions. The blade moment $M_{measured}$ is a function of the rotor position $\alpha$, and pitch angle. Ideally, $M_{measured}$ should be independent of the temperature. But in reality $M_{measured}$ typically exhibits a temperature dependency which may be compensated for by the above mentioned methods of Figures 8 and 10. $M_{measured}$ may also assume negative values. To determine the offset value, $M_{measured}$ is measured at 90° and 270° rotor position, i.e. when the rotor blade is in the 3 o'clock and 9 o'clock positions. These positions can be determined accurately since the measured strain will exhibit its maximum at these positions while zero-crossing at the 12 o'clock and 6 o'clock positions. The offset is determined as the sum of the $M_{measured}$ values measured at 90° and 270° divided by 2.

Fig. 8 illustrates a method for temperature calibration of a strain sensor 160 arranged at rotor blade 110 of wind turbine 100. The method starts by completing the installation of wind turbine 100 in step 300. In the next step 310, slow rolls are performed for pitch angles of 0° and 90° while blade moments are measured simultaneously using strain sensors 160.

In the next step 320, the measured blade moment $M_{measured}$ is determined using the measured voltage values of the strain sensors and the above mentioned formula. The first time step 320 is run, the factory settings of the strain sensors are used.

In the following step 330, it is decided whether the measured blade moment $M_{measured}$ equals the calculated blade moment $M_{calc}$. If those values do not match within a predetermined error margin, the offset value and the gain value of the above mentioned fit function are modified in step 340 and the method returns to step 320. The modification of the offset and gain values in step 340 may be executed manually or by a machine based algorithm. Now, in step 320, the measured blade moment $M_{measured}$ is determined again using the modified offset and gain values. In case the measured blade moment $M_{measured}$ and the calculated blade moment $M_{calc}$ match within a predetermined error margin, the method continues with step 350 in which the determined gain and offset values are outputted.

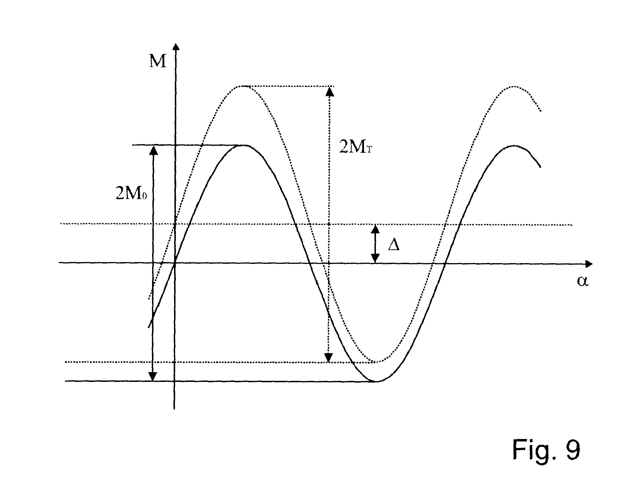

Fig. 9 illustrates the relationship between measured blade moment curves and the parameters ratio of span and difference of offset which are used in embodiments described herein. In Fig. 9, rotor blade moments are plotted against the rotor position angle $\alpha$. To get measurement curves as depicted in Fig. 9, the pitch angles of two rotor blades are set to 65° and the pitch angle of the third rotor blade is set to 0°, 45°, and 90°, consecutively. The rotor position angle $\alpha$ in Fig. 9 refers to the third rotor blade. The blade moments of the third rotor blade is then measured for three 360° turns of the rotor using strain sensors. The plotted curves in Fig. 9 are determined by averaging over three turns of the measured rotor blade moments.

The solid curve in Fig. 9 is a typical measured curve using a strain sensor at the temperature To which was used for the initial temperature calibration of the strain sensor at the factory. The dotted curve shows the same measurement but for a different temperature T. Both curves are sinusoidal as the rotor blade moment is a sine function of the rotor blade angle $\alpha$. One notices that the peak-to-peak amplitude of the two curves is different, being $2M_T$ for the dotted curve measured at temperature T and being $2M_0$ for the solid curve measured at temperature To. Apart from the different peak-to-peak amplitudes, the sine of the solid curve is centered at zero whereas the sine of the dotted curve is centered at a different value. The difference of those center values is called the difference of offset value $\Delta$ which depends on the temperature difference of the two measured curves. The ratio of span R is the ratio of the peak-to-peak amplitudes of the curves measured at temperature To and T:

$$R = 2M_0 / 2M_T.$$

Typically, the value of the ratio of span is about 1.

The aim of the temperature calibration is to have the same curve of the blade moment against rotor angle $\alpha$ for an arbitrary temperature. To this end, one performs a transformation on the values of the curves measured at temperatures T different from the temperature $T_0$ such that they are transformed into the value of the curve measured at To. Therefore, the relationship between the calibrated blade moment $M_{calibrated}$ and the measured uncalibrated blade moment $M_{uncalibrated}$ thus reads as follows:

$$M_{calibrated} = R \cdot (M_{uncalibrated} - \Delta)$$

Fig. 10 illustrates a method for temperature calibration of strain sensor 160 according to another embodiment. The method starts by performing slow rolls for pitch angles of 0°, 45°, and 90° while simultaneously measuring blade moments using strain sensors in step 400. In the next step 410, a minimum value and a maximum value for edgewise and flapwise blade moments are determined. According to another embodiment, the minimum value and the maximum value is determined for the edgewise or the flapwise blade moment. According to further embodiments, blade moments along arbitrary directions are determined.

In step 420, a ratio of span R and a difference of offset value $\Delta$ according to the definitions given in connection with the description of Fig. 9 are calculated. In step 430, it is determined whether the number of data points is sufficiently large to perform reliable statistical analysis. Typically, a collection of about 30 data points measured at different temperatures may be regarded as sufficiently large. Of course, smaller or larger threshold values can be chosen depending on the required accuracy of the regression analysis in the following step. In case the number of data points is larger than 30, the method continues to step 440. In step 440, a regression analysis of the measured data is performed with regard to blade temperature. In case the number of data points is not larger than 30, the method returns to step 400 where more data points at different temperatures are measured.

According to some embodiments, no data is collected if the measured temperature of temperature sensors located at different locations differ more than 1 Kelvin (K). For temperature differences larger than 1 K, the data may be considered not reliable enough or to produce inconsistent results.

According to yet further embodiments, for cases with different temperatures at the strain sensors, a temperature calibration is also possible. For those cases, the regression takes those different temperatures into account and performs a calibration transformation which is similar to the transformation which was described in connection with Fig. 9 but has a different functional dependency as described in connection with Fig. 9.

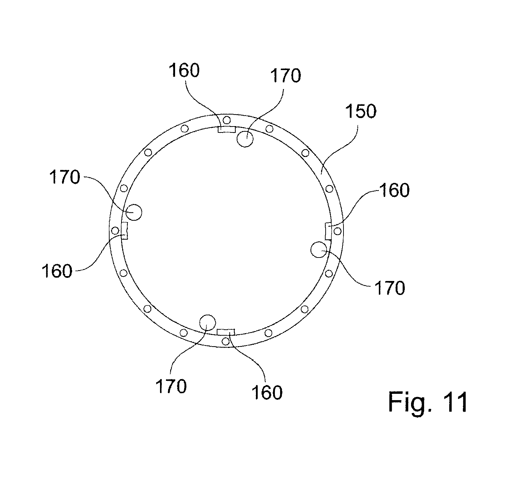

Fig. 11 shows a schematic longitudinal cross sectional view of a rotor blade root 150 of a wind turbine having two Wheatstone bridge circuits which are adapted to measure both edgewise and flapwise bending. The first Wheatstone bridge circuit includes a first pair of strain sensors 160, and the second Wheatstone bridge circuit includes a second pair of strain sensors 160. Both the first pair of strain sensors 160 and the second pair of strain sensors 160 are arranged circumferentially opposite to each other, the second pair of strain sensors 160 being arranged circumferentially offset by about 90° to the first pair of strain sensors 160. Sometimes, it is not convenient to arrange the second pair of strain sensors 160 circumferentially offset by exactly 90° to the first pair of strain sensors 160 due to space limitations. In these cases, the angle between the first pair of strain sensors 160 and the second pair of strain sensors 160 is typically between 70° and 90°, preferably between 80° and 90°, or more preferably between 85° and 90°.

According to one embodiment, strain sensors 160 to the left and right of Fig. 11 are adapted to measure edgewise bending, while strain sensors 160 to the top and bottom of Fig. 11 are adapted to measure flapwise bending of rotor blade 110. Each strain sensor 160 includes two strain gauges so that the embodiment of Fig. 11 includes eight strain gauges in total. The strain sensors 160 depicted at the top and the bottom of Fig. 11 thus form a full Wheatstone bridge circuit 190 as depicted in Fig. 2. The strain sensors 160 depicted at the left and the right of Fig. 11 also form a full Wheatstone bridge circuit 190 as depicted in Fig. 2. For each strain sensor 160, there is provided a temperature sensor 170 adjacent to that strain sensor 160.

According to another embodiment, temperature calibration of the strain sensors 160 includes controlling the temperature of a part of the rotor blade, e.g. of the rotor blade root 150, to a constant temperature and to measure the signal of the strain sensors 160 simultaneously for various controlled temperatures. A regression analysis may then be performed using the measured data, and the result may be used to compensate the temperature dependency of the strain sensors.

According to one embodiment, the temperature calibration of the strain sensor is performed in the factory with the rotor blade not being installed on a wind turbine. Typically, the rotor blade is mounted force-free. In such a case, there is no strain inside the rotor blade such that the formula mentioned above in connection with the description of Fig. 8 simplifies to:

$$M_{measured} = offset\ (T).$$

In such a case, the temperature dependency of the offset value can be calibrated while the temperature dependent gain values are not measured.

According to a further embodiment, predetermined forces are exerted onto the rotor blade. This way, it is possible to generate strain within the rotor blade. This strain gives rise to an additional blade moment which is equal to the strain multiplied by the temperature dependent gain factor. In that case, one may also perform a temperature calibration of the gain value.

Typically, the temperature change of the offset value is about 10 times larger than the respective temperature change of the gain value. Therefore, the main distribution to the temperature dependency of the blade moment arises from the offset value. As the above mentioned force-free mounting using predetermined extern forces is tedious, one typically omits this measurement and performs only a temperature calibration of the offset value. In that case, the largest contribution to the error is calibrated. This means that a good calibration of the factory settings is achieved.

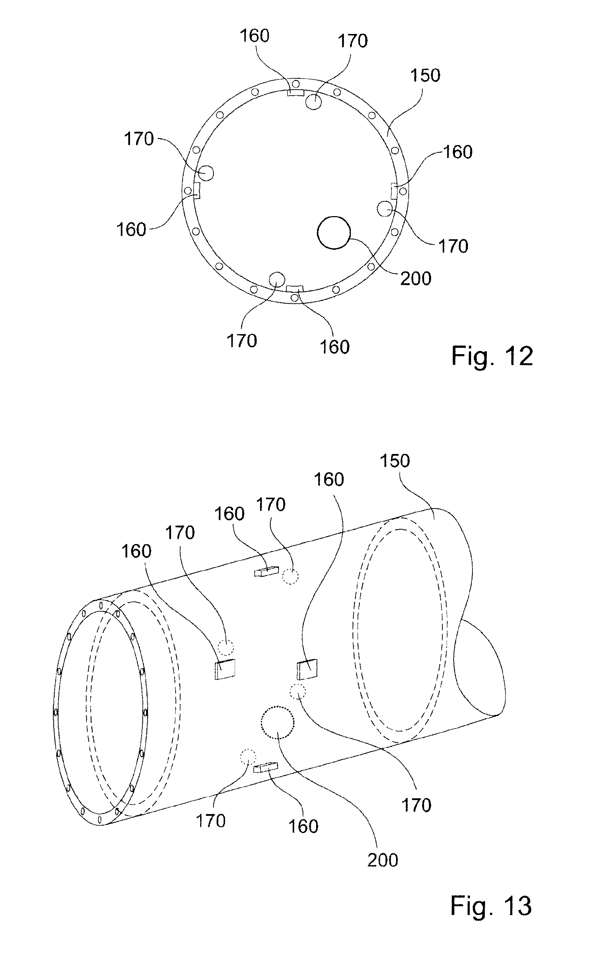

Fig. 12 shows the rotor blade root of Fig. 11 wherein a heater 200 is arranged inside rotor blade root 150. For a temperature calibration, the heater 200 heats for some amount of time, e.g. until all temperature sensors 170 measure the same temperature. At that point of time, the strain sensors 160 measure the strain at their respective location at rotor blade root 150. That step is repeated for various temperatures. The collected data can then be used to perform a regression analysis with which a temperature calibration of the strain sensors may be executed. In order to make sure that the temperature is constant at the locations of strain sensors 160, the heater 200 may be placed in the middle of rotor blade root 150.

Fig. 13 is a schematic perspective view of rotor blade root 150 of a wind turbine 100. Fig. 13 shows the embodiment of Fig. 12 in a perspective view. Strain sensors 160 are arranged in a plane perpendicular to an axis from a center part of rotor blade root 150 to rotor blade tip. Temperature sensors 170 are arranged next to the strain sensors 160 in the same plane as the strain sensors 160. The heater 200 is also arranged in the same plane as strain sensors 160 and temperature sensors 170.

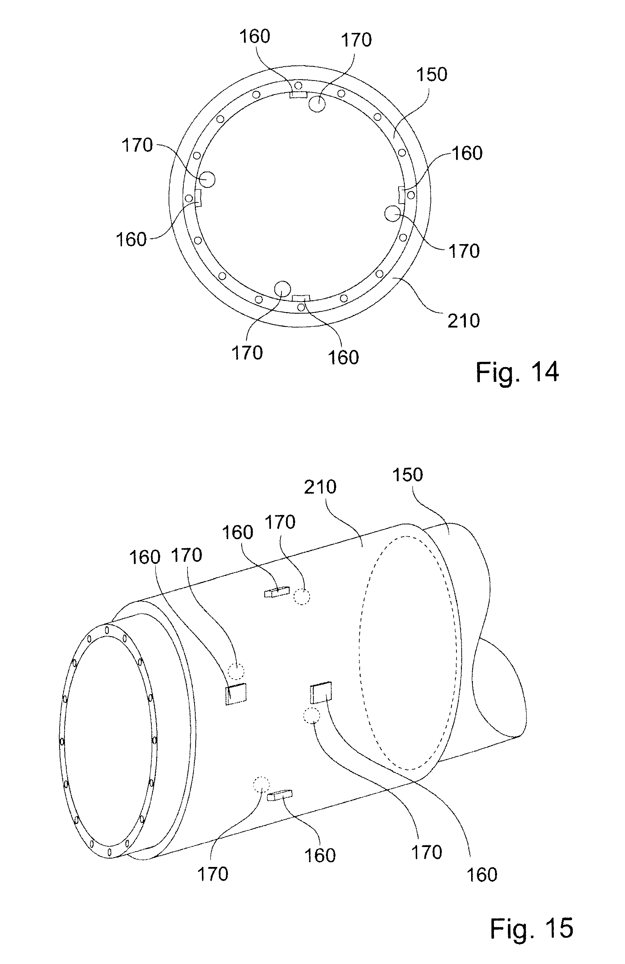

Fig. 14 shows a schematic longitudinal cross sectional view of a rotor blade root 150 of a wind turbine 100 having two Wheatstone bridge circuits 190 which are adapted to measure both edgewise and flapwise bending. What has been said about rotor blade root 150, strain sensors 160 and temperature sensors 170 in connection with Fig. 12 also applies to Fig. 14. The embodiment of Fig. 14 does not use the heater 200 shown in Figs. 12 and 13. Instead, a heating mat 210 is used which is arranged on part of a surface of rotor blade 110. As seen in a cross sectional view of Fig. 14 rotor blade root 150 is enshrouded by heating mat 210. What has been said about the temperature calibration in connection with Fig. 12 also applies to Fig. 14.

Fig. 15 is a schematic perspective view of a rotor blade root of a wind turbine 100. Fig. 15 shows the embodiment of Fig. 14 in a perspective view. Regarding an axis from a center part of rotor blade root 150 to rotor blade tip, heating mat 210 which is wrapped around rotor blade root 150 is centered in the plane in which strain sensors 160 and temperature sensors 170 are arranged.

In further embodiments, heater 200 and heating mat 210 may be exchanged with a cooling device. In particular, these cooling devices may be adapted to cool down the rotor blade portion including the strain sensors. Thus, the temperature dependency of the strain sensors may also be verified for lower temperatures, e.g. below freezing point. According to some embodiments, however, it should be noted that the temperature dependency of the strain sensors may be relatively low for temperatures below 15°C.

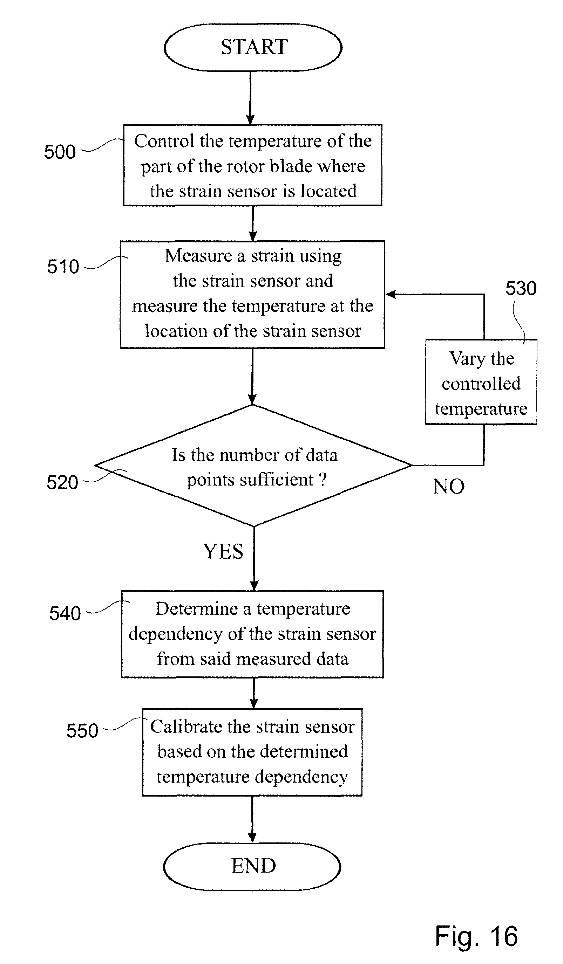

Fig. 16 illustrates yet a further method for temperature calibration of a strain sensor 160 arranged at a rotor blade 110 of a wind turbine 100. The method may be performed using a rotor blade equipped with a heating device according to any of the embodiments of the figures 12 to 15.

The method starts in step 500 by controlling the temperature of part of rotor blade 110 in which the strain sensor 160 is located. According to some embodiments, this is done by a heating mat on the outside of the rotor blade root. According to other embodiments, this is done by a heater arranged inside the rotor blade root.

In step 510, the strain at the location of strain sensor 160 and the temperature at the location of strain sensor 160 are measured.

Although only one strain sensor 160 and only one temperature sensor 170 are shown in Fig. 16 exemplarily, it will be understood by the skilled reader that also a plurality of strain sensors 160 and a plurality of temperature sensors 170 may be used in some embodiments. The temperature measurement of the temperature sensor 170 may be time shifted from the strain measurement. The temperature sensors 170 may also be located at another location as the strain sensors 160. According to other embodiments, the number of temperature sensors 170 is not equal to the number of strain sensors 160. In particular, the number of temperature sensors 170 may be smaller than the number of strain sensors 160.

In the next step 520, it is determined whether the number of measured temperature data points is sufficient. This determination may be done by comparison with a predetermined number of data points to be measured. According to some embodiments, the data points are equally distributed within a temperature interval between two temperatures. The method then starts with either the lowest or the largest temperature and then continues to measure towards the other extreme temperature point. According to further embodiments, this determination is done by statistical calculations.

In case the number of measured temperature data points is not sufficient, the method continues to step 530, while if the number of measured temperature data points is sufficient, the method continues to step 540.

In step 530, the controlled temperature is varied to a different temperature. After step 530, the method returns to step 510 in which the strain at the location of strain sensor 160 and the temperature at the location of strain sensor 160 are measured.

If it was determined in step 520 that the number of measured temperature data points is sufficient, the method continues to step 540. In step 540 a temperature dependency of the strain sensor from the measured data is determined. According to some embodiments, this determination is done by regression analysis methods. According to other embodiments, a temperature dependency of the measured signal of the strain sensor is determined. This determination may also be determined by regression analysis.

In the last step of the method, step 550 the strain sensor is calibrated based on the determined temperature dependency. After step 550 the method ends.

According to some embodiments, no data is collected if the measured temperature of temperature sensors located at different locations differ more than 1 Kelvin (K).

Typically, this method of the embodiment of Fig. 16 is performed with a single rotor blade which is not yet installed in a wind turbine. Hereby, the temperature calibration of the strain sensor is done before installation of the wind turbine. As the rotor blades are not yet installed, this calibration may be done more thoroughly than after installation of the wind turbine. Therefore, one readily may use the wind turbine with a complete set of calibrated rotor blades which is advantageous.

This written description uses examples, including the preferred mode, to enable any person skilled in the art to make and use the described subject-matter. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defined by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

1. A rotor blade comprising:

   a first strain sensor arranged at a surface of the rotor blade; and,
   a first temperature sensor arranged adjacent to the first strain sensor.

2. The rotor blade according to clause 1, further comprising
a second strain sensor arranged at the surface of the rotor blade circumferentially opposite to the first strain sensor; and
a second temperature sensor arranged adjacent to the second strain sensor.

3. The rotor blade according to any preceding clause, wherein each strain sensor comprises
two strain gauges, each strain gauge being adapted to measure a bending moment along a direction from blade root to blade tip; and
the four strain gauges of the first and second strain sensors are electrically connected to each other to form a full Wheatstone bridge circuit.

4. The rotor blade according to any preceding clause, further comprising
third and fourth strain sensors arranged at the surface of the rotor blade, the third strain sensor being arranged circumferentially opposite to the fourth strain sensor and circumferentially offset by about 90° to the first strain sensor; third and fourth temperature sensors, the third temperature sensor arranged adjacent to the third strain sensor and the fourth temperature sensor arranged adjacent to the fourth strain sensor.

5. The rotor blade according to any preceding clause, wherein the first strain sensor is arranged at a leading edge of the rotor blade; and
the second strain sensor is arranged at a trailing edge of the rotor blade.

6. The rotor blade according to any preceding clause, wherein the first strain sensor is arranged at a suction side of the rotor blade; and
the second strain sensor is arranged at a pressure side of the rotor blade.

7. A method for temperature calibration of a strain sensor arranged at a rotor blade of a wind turbine, the method comprising:

operating the wind turbine in a mode in which substantially no bending of the rotor blade due to wind occurs;
repeatedly measuring gravitationally induced bending moments of the rotor blade for a plurality of temperatures measured at the location of the strain sensor;
determining a temperature dependency of the strain sensor from said measured data;
calibrating the strain sensor based on the determined temperature dependency of the strain sensor such that the temperature dependency of the strain sensor is compensated.

8. The method according to any preceding clause, wherein measuring gravitationally induced bending moments of the rotor blade comprises:

measuring bending moments of the rotor blade for a plurality of azimuth positions of the rotor blade and a plurality of pitch angles of the rotor blade.

9. The method according to any preceding clause, further comprising:

calculating a gravitationally induced bending moment of the rotor blade based on the physical properties of the rotor blade, and a rotor azimuth position;
comparing the calculated bending moment of the rotor blade with the measured bending moment for said rotor azimuth position;
calibrating the strain sensor by setting a correction value thus that the measured bending moment equals the calculated bending moment.

10. The method according to any preceding clause, further comprising:

determining a minimum value and a maximum value of the bending moment of the rotor blade;
determining a ratio of span and a difference of offset values;
determining if the number of data points is sufficient;
determining a calibrated bending moment which is equal to a product of the ratio of span value and a difference of the non-calibrated bending moment and the difference of offset value.

11. The method according to any preceding clause, wherein the minimum value and the maximum value of the bending moment of the rotor blade, and the bending moment of the rotor blade are determined for a flapwise direction and an edgewise direction.

12. The method according to any preceding clause, further comprising
determining a functional dependency of the bending moments measured by the strain sensor on the temperature by a regression analysis.

13. A method for temperature calibration of a strain sensor arranged at a rotor blade of a wind turbine, the method comprising:

controlling a temperature of a part of the rotor blade in which said strain sensor is located;
measuring a strain using the strain sensor;

measuring the temperature at the location of the strain sensor;

varying the controlled temperature and repeating the strain and temperature measurements at a different temperature;

determining a temperature dependency of the strain sensor from said measured data; and,

calibrating the strain sensor based on the determined temperature dependency of the strain sensor such that the temperature dependency of the strain sensor is compensated.

14. The method according to any preceding clause, wherein the temperature is controlled by means of a heating mat arranged on a part of a surface of said rotor blade.

15. The method according to any preceding clause, wherein the heated part of the surface of the rotor blade is larger than the joining area of the rotor blade and the strain sensor.

16. The method according to any preceding clause, wherein the temperature is controlled by means of a heating fan arranged inside the rotor blade.

17. The method according to any preceding clause, wherein the temperature is controlled by means of a vapor compression refrigeration system adapted to cool a part of a surface of the rotor blade.

18. The method according to any preceding clause, further comprising:

thermally insulating the temperature-controlled part of the rotor blade from a further part of the rotor blade in which the temperature is not controlled.

19. The method according to any preceding clause, wherein the temperature is controlled between about -20°C to about +50°C.

20. The method according to any preceding clause, further comprising:

increasing the temperature of a part of the rotor blade from an initial temperature to a final temperature in a step wise manner;

measuring, in every step, a bending moment of the rotor blade using the strain sensor;

measuring, in every step, the temperature at the position of the strain sensor;

determining a functional dependency between the bending moment and the measured temperature.

**Claims**

1. A rotor blade (110) comprising:

a first strain sensor (160) arranged at a surface of the rotor blade (110); and

a first temperature sensor (170) arranged adjacent to the first strain sensor (160).

2. The rotor blade (110) according to claim 1, further comprising

a second strain sensor (160) arranged at the surface of the rotor blade (110) circumferentially opposite to the first strain sensor (160); and

a second temperature sensor (170) arranged adjacent to the second strain sensor (160).

3. The rotor blade (110) according to claim 1 or 2, wherein

the first strain sensor (160) is arranged at a leading edge (113) of the rotor blade (110); and

the second strain sensor (160) is arranged at a trailing edge (114) of the rotor blade (110) or

the first strain sensor (160) is arranged at a suction side (111) of the rotor blade (110); and

the second strain sensor (160) is arranged at a pressure side (112) of the rotor blade (110).

4. The rotor blade (110) according to claim 2 or 3, wherein

each strain sensor (160) comprises two strain gauges, each strain gauge being adapted to measure a bending moment along a direction from blade root (150) to blade tip; and

the four strain gauges of the first and second strain sensors (160) are electrically connected to each other to form a full Wheatstone bridge circuit (190).

5. The rotor blade (110) according to any of the preceding claims, further comprising
third and fourth strain sensors (160) arranged at the surface of the rotor blade (110), the third strain sensor (160) being arranged circumferentially opposite to the fourth strain sensor (160) and circumferentially offset by about 90° to the first strain sensor (160);
third and fourth temperature sensors (170), the third temperature sensor (170) arranged adjacent to the third strain sensor (160) and the fourth temperature sensor (170) arranged adjacent to the fourth strain sensor (160).

6. A method for temperature calibration of a strain sensor (160) arranged at a rotor blade (110) of a wind turbine (100), the method comprising:

operating the wind turbine (100) in a mode in which substantially no bending of the rotor blade (110) due to wind occurs;
repeatedly measuring gravitationally induced bending moments of the rotor blade (110) for a plurality of temperatures measured at the location of the strain sensor (160);
determining a temperature dependency of the strain sensor (160) from said measured data;
calibrating the strain sensor (160) based on the determined temperature dependency of the strain sensor (160) such that the temperature dependency of the strain sensor (160) is compensated.

7. The method according to claim 6, wherein
measuring gravitationally induced bending moments of the rotor blade (110) comprises:

measuring bending moments of the rotor blade (110) for a plurality of azimuth positions of the rotor blade (110) and a plurality of pitch angles of the rotor blade (110); and
the method further comprises:

calculating a gravitationally induced bending moment of the rotor blade (110) based on the physical properties of the rotor blade (110), and a rotor azimuth position;
comparing the calculated bending moment of the rotor blade (110) with the measured bending moment for said rotor azimuth position;
calibrating the strain sensor (160) by setting a correction value thus that the measured bending moment equals the calculated bending moment.

8. The method according to claim 6 or 7, further comprising
determining a functional dependency of the bending moments measured by the strain sensor (160) on the temperature by a regression analysis.

9. A method for temperature calibration of a strain sensor (160) arranged at a rotor blade (110) of a wind turbine (100), the method comprising:

controlling a temperature of a part of the rotor blade (110) in which said strain sensor (160) is located;
measuring a strain using the strain sensor (160);
measuring the temperature at the location of the strain sensor (160);
varying the controlled temperature and repeating the strain and temperature measurements at a different temperature;
determining a temperature dependency of the strain sensor (160) from said measured data; and
calibrating the strain sensor (160) based on the determined temperature dependency of the strain sensor (160) such that the temperature dependency of the strain sensor (160) is compensated.

10. The method according to claim 9, further comprising:

increasing the temperature of a part of the rotor blade (110) from an initial temperature to a final temperature in a step wise manner;
measuring, in every step, a bending moment of the rotor blade (110) using the strain sensor (160);
measuring, in every step, the temperature at the position of the strain sensor (160);
determining a functional dependency between the bending moment and the measured temperature.

100

110 120 130

140

Fig. 1

Fig. 2

Fig. 3

Fig. 4

Fig. 5

Fig. 6

Fig. 7

START

300 — Complete wind turbine installation

310 — Perform slow rolls for pitch angles of 0° and 90° and measure simultaneously blade moments using strain sensors

320 — Determine a measured blade moment using the fit function
$M_{measure}$ = offset + gain · strain

$M_{calc}$ = $m_{rotor}$ · g · L · sin($\alpha$)

340 — Modification of offset value and gain value

330 — Does $M_{measured}$ equal $M_{calc}$? — NO

YES

350 — Output gain value, offset value and blade temperature

END

Fig. 8

Fig. 9

START

400 — Perform slow rolls for
pitch angles of 0°, 45°, and 90°
and measure simultaneously
blade moments using
strain sensors

410 — Determine MIN / MAX for
edge / flap moments

420 — Calculation of ratio of
span and difference of offset

430 — Is the number of data
points larger than 30 ?

NO

YES

440 — Perform a regression analysis
of the measured data with
blade temperature

END

Fig. 10

Fig. 11

Fig. 12

Fig. 13

Fig. 14

Fig. 15

START

500 — Control the temperature of the part of the rotor blade where the strain sensor is located

510 — Measure a strain using the strain sensor and measure the temperature at the location of the strain sensor

530 — Vary the controlled temperature

520 — Is the number of data points sufficient ?

NO

YES

540 — Determine a temperature dependency of the strain sensor from said measured data

550 — Calibrate the strain sensor based on the determined temperature dependency

END

Fig. 16